# EUROPÄISCHE PATENTSCHRIFT

(11) **EP 0 821 538 B1**
(45) Veröffentlichungstag und Bekanntmachung des Hinweises auf die Patenterteilung: **22.08.2001**
(21) Anmeldenummer: 96440057.6
(22) Anmeldetag: 26.07.1996
(51) Int. Cl.: H04Q 11/04, H04M 11/06

(54) **Vorrichtung zum Wiedergeben und Senden von Nachrichten unterschiedlicher Formate**
Apparatus for transmitting and receiving messages with different formats
Dispositif de transmission et de réception de messages de différents formats

(43) Veröffentlichungstag der Anmeldung: 28.01.1998
(73) Patentinhaber: ALCATEL, 75008 Paris (FR)
(72) Erfinder: Lecomte, Daniel, 75116 Paris (FR)
(74) Vertreter: Knecht, Ulrich Karl, Dipl.-Ing.

(56) Entgegenhaltungen:
- EP-A- 0 650 284
- GB-A- 2 183 880
- US-A- 5 091 931
- PATENT ABSTRACTS OF JAPAN vol. 016, no. 108 (E-1179), 17.März 1992 & JP 03 283852 A (NEC CORP;OTHERS: 01), 13.Dezember 1991,
- PATENT ABSTRACTS OF JAPAN vol. 95, no. 009 & JP 07 250151 A (RICOH CO LTD), 26.September 1995,

## Beschreibung

Die Erfindung betrifft eine Vorrichtung zum Wiedergeben und Senden von über ein Nachrichtenübertragungsnetz übertragene Nachrichten unterschiedlicher Formate. Insbesondere betrifft die Erfindung eine Vorrichtung zum Wiedergeben und Senden von übertragenen Nachrichten, die aus dem Internet oder dem WorldWideWeb (WWW) stammen oder aber aus dem diensteintegrierenden Nachrichtennetz (ISDN) übertragen werden.

Aus dem Stand der Technik sind sogenannte CTI (Computer-Telephone-Integration) Applikationen bekannt. Hierunter wird das sogenannte PC-gestützte Telefonieren verstanden. Systeme, die in der Lage sind, aus einem PC ein Telefon zu machen, haben z. B. folgendes Aussehen:

Der PC wird über die V.24-Schnittstelle mit einem Telefon verbunden. Von dem Telefon aus, vielmehr von dem S_{O}-Bus aus wird eine Verbindung mit einem sogenannten ISDN-Kommunikationssystem hergestellt. Dieses verbindet wiederum den PC und das Telefon mit dem öffentlichen Netz. Eine weitere Möglichkeit ist, den PC über eine ISDN-Karte und den S_{O}-Bus an das öffentliche Netz direkt anzuschließen.

Zum Erreichen der Telefonfunktion im PC wird an die a/b-Schnittstelle ein Telefon angehangen. Zum direkten Anhören von Nachrichten über den PC wird zusätzlich ein Kopfhörer und ein Mikrofon zum Aufsprechen von Nachrichten an dem PC angebracht. Grundlage einer solchen Verbindung ist die sogenannte TAPI. Hierunter wird Telephone Application Programming Interface verstanden. Dieses Interface ist eine einheitliche Schnittstelle für Telekommunikationsprogramme.

Applikationen unter TAPI mit beliebiger Hardware, wie Modems, ISDN-Karten oder Nebenstellenanlagen arbeiten zusammen. Auch bei der Telefon-Technologie steht eine breite Angebotspalette zur Verfügung. Dazu gehört die analoge Telefontechnologie ebenso wie ISDN oder ATM.

TAPI bietet demgemäß eine einheitliche Programmierschnittstelle, die unabhängig von Kommunikations-Hardware und Übertragungsart, z. B. ISDN oder GSM, immer eine einheitliche Benutzeroberfläche bereitstellt. TAPI erlaubt weiterhin die gemischte Übertragung von Daten und Sprache und verfügt über eine eingebaute Fax\Daten\Sprachweiche für die Differenzierung eingehender Anrufe.

Diese sogenannte Internet-Telefonie, mit der kostengünstig aber qualitativ eher mager eine Verbindung zu weiteren Anschlüssen hergestellt werden kann, wird zukünftig mit sogenannten Voice-Gateways ausgerüstet. Damit benötigt der angerufene Gesprächspartner für seinen PC keinen eigenen Internet-Anschluß mehr (aus: "Der PC als Telefon", "Funkschau 12/96", Seiten 24 - 31).

Weitere, aus dem Stand der Technik bekannte Lösungen beschreiben, wie ein Personalcomputer zum Komforttelefon umgebaut werden kann. Die Gründe zum Einsatz des CTI's sind folgende:

Durch den Einsatz computergestützter Telefonie gelingt es dem Kunden, eine verbesserte Dienstleistung anzubieten. Bei einer solchen Anwendung wird ein Personalcomputer, im folgenden PC genannt, durch Einsatz bestimmter Schnittstellen und von Software in ein Komforttelefon umgewandelt (aus: "Der Personal-Computer als Komforttelefon"; "Funkschau 14/96", Seiten 74 - 81).

Die zuvor beschriebenen Lösungen aus dem Stand der Technik verwenden bestimmte Schnittstellen und Software zum Umfunktionieren eines PCs in ein Komforttelefon. Voraussetzungen hierfür sind, daß ein PC mit einer gewissen Leistung vorhanden ist, sowohl als auch eine Schnittstelle zu einem Telefonnetz. Hierzu muß aber immer ein Personalcomputer bereitstehen oder aber zusätzlich muß ein Endgerät vorhanden sein. Eine solche Lösung bietet zwar eine große Anzahl an Leistungsmerkmalen und ist in der eigentlichen Anwendung benutzerfreundlich, aber eine solche Lösung bedarf eines großen Platzes zum Aufstellen eines PCs, es besteht keinerlei Möglichkeit, sich während des "Telefonierens" vom Platz wegzubewegen, auch muß zum einfachen Nachrichtenentgegennehmen erst einmal ein Programm gestartet werden, wozu gewisse Grundkenntnisse Grundbedingung sind. Bei professioneller Awendung in der Büroumgebung wird die Arbeitsweise mittels eines solchen PCs in Kombination mit dem Komforttelefon zwar erleichtert, aber in häuslicher, privater Umgebung ist dieses eher unpraktisch.

Aus dem Dokument EP-A-650 284 ist eine Vorrichtung mit den im Oberbegriff des Anspruchs 1 erwähnten Merkmalen bekannt.

Aufgabe der Erfindung ist es, eine Vorrichtung zu schaffen, welche benutzerfreundlicher ist.

Dies wird erfindungsgemäss gelöst durch die Vorrichtung mit einer Spracherkennungseinheit zur Erkennung der gesprochenen Sprache und mit einer Einheit zur Umwandlung der gesprochenen Sprache in eine E-mail-Nachricht in Textformat zur Übertragung dieser E-mail-Nachricht als Textnachricht über das Nachrichtenübertragungsnetz, wie in den kennzeichenden Merkmalen des Anspruchs 1 erwähnt.

Durch die Umwandlung der gesprochenen Sprache in eine E-mail-Nachricht in Textformat kann man mittels Sprache zu sendende E-mail-Nachrichten generieren, und die Benutzerfreundlichkeit erhöhen.

Vorteilhaft erweist sich hierbei, daß der Benutzer einer solchen Vorrichtung sowohl Nachrichten unterschiedlicher Formate empfangen als auch Nachrichten unterschiedlicher Formate senden kann. Hierbei wird unter Nachrichten unterschiedlicher Formate beispielsweise eine Nachricht aus dem Internet, z. B. E-Mail verstanden, oder aber eine Sprachnachricht. Der Benutzer kann somit in vorteilhafter Weise wechseln zwischen Textnachrichten oder Sprachnachrichten, die er sich in jeder für ihn gewünschten Form anhören oder ansehen kann. Weiterhin vorteilhaft ist, daß für eine solche Anwendung kein PC installiert sein muß, auf dem dann wiederum eine aufwendige Software gestartet werden muß, um ein Telefonat zu führen. Trotzdem kann mit einer solchen Vorrichtung in einfacher Weise eine ähnliche Funktion ausgeführt werden.

Weitere vorteilhafte Ausgestaltungen sind den Unteransprüchen zu entnehmen.

Ein besonderer Vorteil ergibt sich aus Unteranspruch 3, bei dem die übertragenen Sprachnachrichten oder die übertragenen Textnachrichten in dessen zugeordneten Speichern abgespeichert werden, um sich später wieder anzusehen oder in ein anderes Format umzuwandeln. Dies erhöht in vorteilhafter Weise die Flexibilität des Systems.

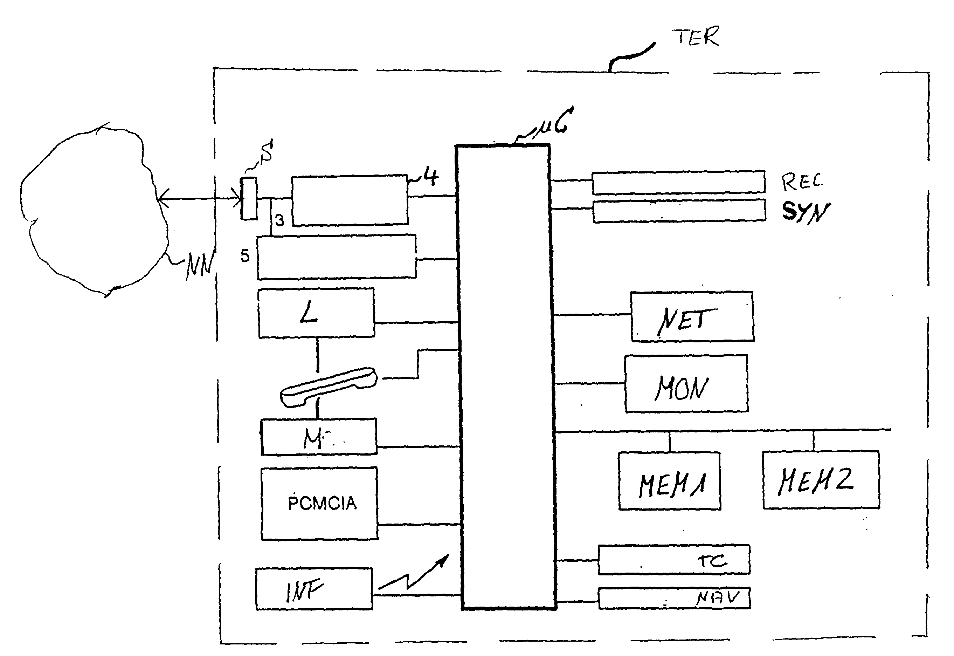

Im folgenden wird die Erfindung anhand der Figur näher erläutert. Folgende Figur zeigt:
Figur: Blockschaltbild einer erfindungsgemäßen Vorrichtung.

Eine Vorrichtung TER zum Wiedergeben von über ein Nachrichtenübertragungsnetz NN übertragenen Nachrichten unterschiedlicher Formate, weist eine Schnittstelle S zur Anpassung der Vorrichtung TER an das Nachrichtennetz NN auf. Hierbei ist das Nachrichtenübertragungsnetz NN beispielsweise das dienstintegrierende digitale Nachrichtennetz, das ISDN-Netz. Die Schnittstelle S ist beispielsweise über einen Telefondraht 3 mit einem weiteren Schnittstellenschaltkreis 4 verbunden, der z. B. ein Modem enthält. Ebenfalls weist diese Vorrichtung TER einen Schaltkreis 5 auf, der zur Spannungsversorgung der Schnittstelle S dient. Dies kann beispielsweise eine einfache Batterie sein. Über die Schnittstelle S und den Schnittstellenschaltkreis 4 wird zwischen dem Nachrichtenübertragungsnetz NN eine Verbindung zum dem Microcontroller *µ*C Spannungsversorgung der Schnittstelle S dient. Dies kann beispielsweise eine einfache Batterie sein. Über die Schnittstelle S und den Schnittstellenschaltkreis 4 wird zwischen dem Nachrichtenübertragungsnetz NN eine Verbindung zum dem Microcontroller *µ*C hergestellt. Der Microcontroller µC besitzt einen integrierten ROM-Speicher. An diesen Microcontroller angeschlossen sind weitere Speicherbausteine MEM 1, MEM 2, die aus nichtflüchtigen Speicherbausteinen, z. B. vom Typ Eprom oder Flash-Eprom aufgebaut sind.

Der zuvor beschriebene Schnittstellenschaltkreis 4 zur Anpassung von Nachrichten des Nachrichtenübertragungsnetzes an den Microcontroller *µ*C wird im folgenden kurz Modem bezeichnet. Dieses Modem dient hauptsächlich dazu, einen Anschluß zu einem Internet oder zu dem WorldWideWeb herzustellen. Dieses Modem ist deshalb zum Beispiel in der Lage, unterschiedliche Geschwindigkeiten zu verarbeiten. Dies bedeutet, daß das Modem in der Lage ist, z. B. 28.000 Bit/sec zu händeln. Eine andere Möglichkeit des Modems ist es, ein digitales Interface des ISDN-Typs vorzusehen.

Desweiteren ist in der Vorrichtung TER zum Wiedergeben übertragener Nachrichten unterschiedlicher Formate ein Netzübergang NET zur Anpassung der übertragenen Nachrichten unterschiedlicher Formate an die Vorrichtung vorgesehen.

Desweiteren besitzt die Vorrichtung TER zum Wiedergeben eine Spracherkennungseinheit REC zum Erkennen einer gesprochenen Sprachnachricht. Dazu angeordnet ist eine Einheit zur Umwandlung der gesprochenen Sprachnachricht in einen Text. Die Vorrichtung TER zum Wiedergeben von Nachrichten besitzt des weiteren eine Spracherzeugungseinheit SYN zur Erzeugung von Sprache aus einer Nachricht in Textformat. Dazu gehörend ist eine Einheit zur Umwandlung der Textnachricht in Sprache angeordnet. Zur Ausgabe der so erzeugten Sprachnachricht ist ein Lautsprecher L zur Ausgabe der Sprache angeordnet. Zur Anzeige eines Textes ist ein Monitor MON angeordnet.

Da über diese Vorrichtung TER zum Wiedergeben auch Nachrichten aufgesprochen werden sollen, die dann wiederum über das Nachrichtenübertragungsnetz zu einem weiteren Teilnehmer gesendet werden, ist ebenfalls ein Mikrofon M vorgesehen.

In weiteren Ausgestaltungen der Vorrichtungen TER zum Wiedergeben kann beispielsweise ein sogenannter berührungsempfindlicher Monitor vorgesehen werden TC, der zur Eingabe dient. Als weitere Ausgestaltung ist es ebenfalls möglich, Mittel NAV vorzusehen, mittels derer auf einem Monitor und auf einem darauf angebotenen Menü ein Cursor hin und her bewegt werden kann. Zur Ansteuerung einer solchen Vorrichtung TER kann ein Infrarot-Empfänger INF zum Veranlassen und Beenden von Funktionen vorgesehen werden.

Die Vorrichtung TER zum Wiedergeben von über ein Nachrichtenübertragungsnetz NN übertragener Nachrichten unterschiedlicher Formate wird verwendet zur Übertragung von z. B. E-Mails oder von Sprachnachrichten. Hierbei wird unter dem Übertragungsnetz für die E-Mails ein sogenanntes Nachrichtenverteilnetz vorgesehen. Dies kann beispielsweise ein Nachrichtenverteilnetz vom Typ Internet sein, es kann aber auch ausgeweitet werden auf ein Nachrichtenverteilnetz nach dem WorldWideWeb (WWW)-Format.

Bei den vorgenannten zusätzlichen Mitteln der Vorrichtung TER von Nachrichten unterschiedlicher Formate bleibt anzuführen, daß die Vorrichtung in Form eines Komforttelefons ausgebildet sein kann und auch alle Leistungsmerkmale eines Komforttelefons dem Benutzer anbieten sollte. Dies kann bedeuten, daß Leistungsmerkmale eines Komforttelefons auch über eine Karte, wie z. B. eine PCMCIA Karte, zur Verfügung gestellt werden. Dazu ist in der Vorrichtung eine Vorrichtung PCMCIA zum Einfügen der Karte vorhanden.

## Patentansprüche

1. Vorrichtung (TER) zum Wiedergeben und Senden von über ein Nachrichtenübertragungsnetz (NN) übertragenen Nachrichten unterschiedlicher Formate,
mit einer Schnittstelle (S) zur Anpassung der Vorrichtung (TER) an das Nachrichtenübertragungsnetz (NN),
mit einem Netzübergang (NET) zur Anpassung der übertragenen Nachrichten unterschiedlicher Formate an die Vorrichtung,
mit einer Spracherzeugungseinheit (SYN) zur Erzeugung von Sprache aus einer über das Nachrichtenübertragungsnetz (NN) übertragenen E-mail-Nachricht in Textformat und mit einem Lautersprecher (L) zur Ausgabe dieser Sprache und zur Ausgabe von Sprache einer über das Nachrichtenübertragungsnetz (NN) übertragenen Sprachnachricht,
mit einem Mikrofon zum Empfang von Sprache zur Übertragung dieser Sprache als Sprachnachricht über das Nachrichtenübertragungsnetz (NN),
mit dem Kennzeichen, dass die Vorrichtung (TER) eine Spracherkennungseinheit (REC) zur Erkennung der gesprochenen Sprache und eine Einheit zur Umwandlung der gesprochenen Sprache in eine E-mail-Nachricht in Textformat zur Übertragung dieser E-mail-Nachricht als Textnachricht über das Nachrichtenübertragungsnetz (NN) enthält.

2. Vorrichtung nach Anspruch 1, mit dem Kennzeichen, dass die übertragenen Nachrichten unterschiedlicher Formate, E-mail-Nachrichten eines Nachrichtenverteilnetzes und Sprachnachrichten eines Telekommunikationsnetzes sind.

3. Vorrichtung nach Anspruch 1 oder 2, mit dem Kennzeichen, dass die Vorrichtung (TER) die Spracherkennungseinheit (REC) zur Erkennung der gesprochenen Sprache der über das Nachrichtenübertragungsnetz (NN) übertragenen Sprachnachricht und die Einheit zur Umwandlung der gesprochenen Sprache in einen Text und einen Monitor zur Anzeige des Textes auf demselben enthält.

4. Vorrichtung nach Anspruch 3, mit dem Kennzeichen, dass die Vorrichtung (TER) den Monitor zur Anzeige der über das Nachrichtenübertragungsnetz (NN) übertragenen E-mail-Nachricht in Textformat auf demselben enthält.

## Claims

1. An apparatus (TER) for reproducing messages of different formats transmitted over a communications network (NN) and for sending messages of different formats over the communications network (NN),
with an interface (S) for interfacing the apparatus (TER) to the communications network (NN),
with a device (NET) for adapting the transmitted messages of different formats to the apparatus,
with a unit (SYN) for converting an E-mail message in text format, transmitted over the communications network (NN), into speech, and with a loudspeaker (L) for outputting this speech and for outputting speech of a voice message transmitted over the communications network (NN),
with a microphone for receiving spoken words for transmission these spoken words as a voice message over the communications network (NN),
with the characterizing feature that the apparatus (TER) comprises a voice recognition unit (REC) for recognizing spoken words and a unit for converting the spoken words into an E-mail message in text format for transmission of this E-mail message as a text message over the communications network (NN).

2. An apparatus as claimed in claim 1, with the characterizing feature that the transmitted messages of different formats are E-mail messages of a message distribution network and voice messages of a telecommunications network.

3. An apparatus as claimed in claim 1 or 2, with the characterizing feature that the apparatus (TER) comprises the voice recognition unit (REC) for recognizing the spoken words of the voice message transmitted over the communications network (NN), the unit for converting the spoken words into text, and a monitor for displaying the text on the same.

4. An apparatus as claimed in claim 3, with the characterizing feature that the apparatus (TER) comprises the monitor for displaying the E-mail message in text format transmitted over the communications network (NN).

## Revendications

1. Dispositif (TER) pour restituer et envoyer des messages de formats différents transmis par l'intermédiaire d'un réseau de transmission de messages (NN),
avec une interface (S) pour adapter le dispositif (TER) au réseau de transmission de messages (NN),
avec une jonction de réseau (NET) pour adapter les messages de formats différents transmis au dispositif,
avec un module de synthèse vocale (SYN) pour générer de la parole à partir d'un message e-mail au format texte transmis par l'intermédiaire du réseau de transmission de messages (NN) et avec un haut-parleur (L) pour émettre cette parole et pour émettre de la parole d'un message vocal transmis par l'intermédiaire du réseau de transmission de messages (NN),
avec un microphone de réception de parole pour transmettre cette parole sous la forme d'un message vocal par l'intermédiaire du réseau de transmission de messages (NN),
caractérisé en ce que le dispositif (TER) contient un module de reconnaissance vocale (REC) pour identifier la parole et un module pour convertir la parole en un message e-mail au format texte afin de transmettre ce message e-mail sous la forme d'un message textuel par l'intermédiaire du réseau de transmission de messages (NN).

2. Dispositif selon la revendication 1, caractérisé en ce que les messages de formats différents transmis sont des messages e-mail d'un réseau de distribution de messages et des messages vocaux d'un réseau de télécommunications.

3. Dispositif selon la revendication 1 ou la revendication 2, caractérisé en ce que le dispositif (TER) contient le module de reconnaissance vocale (REC) pour détecter la parole du message vocal transmis par l'intermédiaire du réseau de transmission de messages (NN) et le module pour convertir la parole en texte et un moniteur pour afficher le texte sur celui-ci.

4. Dispositif selon la revendication 3, caractérisé en ce que le dispositif (TER) contient le moniteur pour afficher sur celui-ci le message e-mail au format texte transmis par l'intermédiaire du réseau de transmission de messages (NN).
